# FASCICULE DE BREVET EUROPEEN

(11) **EP 2 424 110 B1**
(45) Date de publication et mention de la délivrance du brevet: **24.04.2013**
(21) Numéro de dépôt: 11178422.9
(22) Date de dépôt: 23.08.2011
(51) Int. Cl.: H03K 3/037, H03K 19/003, G06F 21/00

(54) **Sécurisation d'un élément de mémorisation d'une donnée binaire, registre de contrôle et d'une carte à puce**
Sicherung eines Speicherelements für Binärdaten, Kontrollregister und eine Chipkarte
Securisation of an element for storing binary data, check register and a smart card

(30) Priorité: 25.08.2010 FR 1056759
(43) Date de publication de la demande: 29.02.2012
(73) Titulaire: Oberthur Technologies, 92300 Levallois-Perret (FR)
(72) Inventeur: Morin, Nicolas, 33400 Talence (FR); Thiebeauld de la Croue, Hugues, 33600 Pessac (FR)
(74) Mandataire: Delumeau, François Guy

(56) Documents cités:
- EP-A2- 1 130 515
- WO-A2-2008/027966
- US-A1- 2005 127 971
- US-B1- 6 791 362

## Description

L'invention se situe dans le domaine de la sécurisation des dispositifs électroniques. Elle s'applique en particulier mais de façon non limitative à la sécurisation des cartes à circuits intégrés, autrement appelées cartes à puces.

De façon connue, il est usuel de mémoriser dans les registres dits « de contrôle » d'une carte à puce des informations sensibles, par exemple des clefs secrètes destinées à être utilisées dans des algorithmes cryptographiques, par exemple des clefs DES ou AES.

Ces registres de contrôle sont constitués d'une pluralité d'éléments de mémorisation, chacun étant apte à mémoriser un élément binaire (bit).

Ces éléments de mémorisation sont souvent constitués par des bascules D ou DFF (D Flip Flop) tels que décrites maintenant.

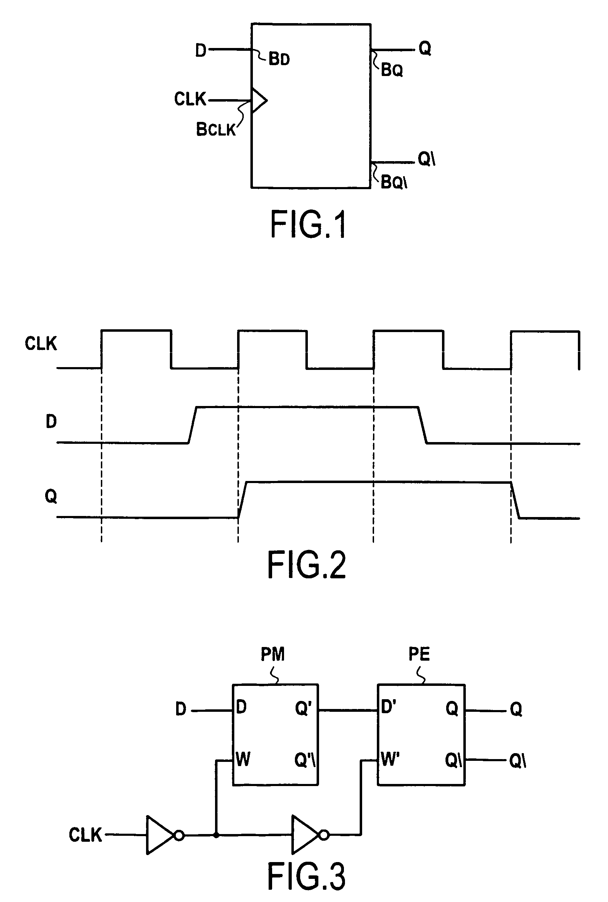

La **figure 1** représente une bascule D, ou DFF (D Flip Flop) de l'état de la technique.

Une telle bascule est traditionnellement utilisée comme élément de synchronisation par rapport à une horloge ou comme élément de mémorisation pour un élément binaire (ou bit).

Une bascule D comporte deux bornes d'entrées B_{D}, B_{CLK}, et deux bornes de sorties B_{Q}, B_{Q\} aptes à recevoir et fournir respectivement :
- un signal D d'entrée ;
- un signal CLK d'horloge ;
- un signal Q de sortie ; et
- un signal Q\ complémenté du signal de sortie Q.

Optionnellement, une borne d'entrée supplémentaire peut être prévue pour recevoir un signal de réinitialisation RESET.

Le fonctionnement de la bascule D est illustré par le chronogramme de la **figure 2** : le signal Q de sortie prend la valeur du signal d'entrée D sur chaque front montant du signal CLK d'horloge, ces fronts montants étant représentés en traits pointillés.

La **figure 3** représente les détails de la bascule D de la figure 1.

De façon connue, une bascule D est elle-même constituée de deux portes (ces portes étant également connues sous le nom anglais « latchs » en anglais), à savoir une porte maître PM et une porte esclave PE.

Chacune de ces portes PM, PE reçoit un signal d'entrée W, W' correspondant au signal CLK d'horloge inversé.

Lorsque le signal W est au niveau bas, on dit que la porte maître PM (ou latch maître) est verrouillé, chacune des sorties Q' et Q'\ gardant leurs valeurs, quelle que soit la valeur du signal d'entrée D.

Lorsque le signal W passe au niveau haut, on dit que la porte maître PM (ou latch maître)'un latch est déverrouillé, les signaux de sorties Q' et Q'\ prenant respectivement la valeur du signal d'entrée D et de son complémentaire D\.

Dans la bascule D de la figure 3, on note la présence d'un signal intermédiaire Q' en sortie de la porte maître PM, ce signal étant fourni en entrée de la porte esclave PE.

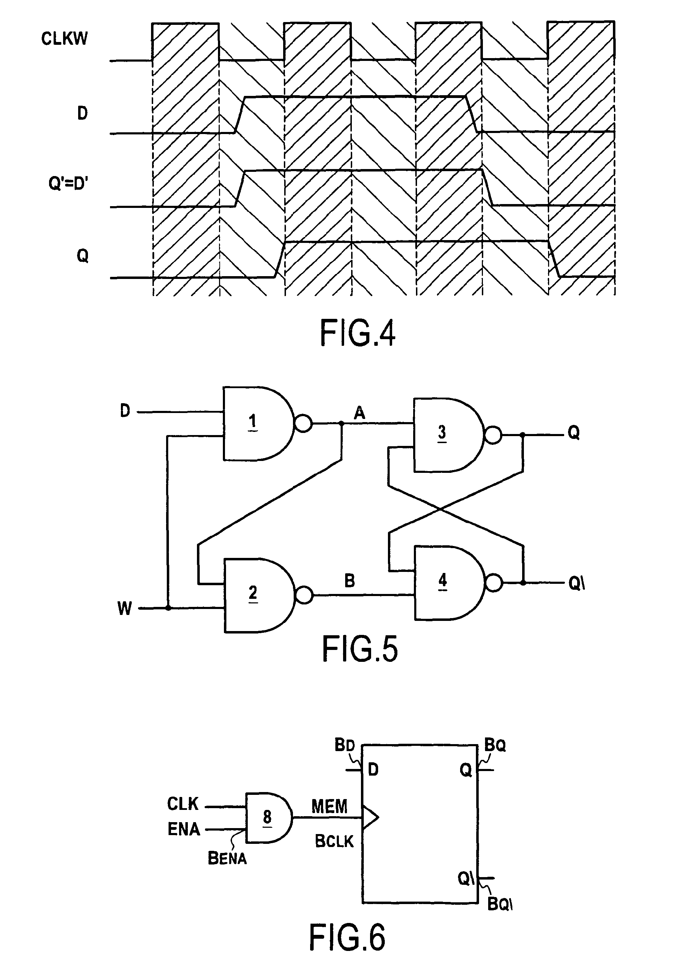

La **figure 4** illustre le chronogramme de la bascule D y compris celui de ce signal intermédiaire Q'.

Dans une telle bascule :
- lorsque l'horloge est à un niveau bas (hachures espacées), la porte maître PM est déverrouillée et la porte esclave PE est verrouillée : la valeur du signal intermédiaire Q' en sortie de la porte maître PM est égale à la valeur du signal d'entrée D ; et
- lorsque l'horloge est à un niveau haut (hachures resserrées), la porte maître PM est verrouillée et la porte esclave PE déverrouillée : la valeur du signal Q de sortie de la porte esclave PE prend la valeur du signal intermédiaire Q'.

La **figure 5** illustre de façon détaillée une porte (ou latch) PM ou PE sous forme de fonctions logiques, chaque référence 1 à 4 représentant une fonction logique NON-ET (NAND), étant rappelé qu'une telle fonction logique produit une sortie égale à 0 lorsque ses deux entrées sont égales à 1, et une sortie égale à 1 dans les trois autres cas.

On notera en particulier que le signal de sortie Q est réinjecté en entrée de la fonction logique NON-ET 4 produisant le signal Q\, et de la même façon, que le signal Q\ est réinjecté en entrée de la fonction logique NON-ET 3, ce qui introduit un décalage temporel entre la commutation des signaux Q et Q\.

Il sera expliqué ultérieurement comment l'invention utilise avantageusement ce décalage temporel.

De façon connue, il est possible d'utiliser un signal supplémentaire ENA de validation (« enable » en anglais) pour maîtriser le front sur lequel la donnée binaire doit être mémorisée par la bascule D.

En pratique le signal de validation ENA est fourni par une machine à état et synchronisé avec le signal d'horloge CLK.

La **figure 6** illustre cette réalisation, le signal d'horloge CLK n'étant plus fourni directement sur la borne d'entrée B_{CLK} de la bascule D, le signal MEM dit « de mémorisation » en entrée de cette borne étant le résultat d'un ET logique entre le signal d'horloge CLK et le signal de validation ENA lui-même.

Dans la suite de ce document on appellera « borne de validation » B_{ENA} la borne d'entrée d'une fonction ET logique 8 recevant le signal de validation ENA, le signal de sortie de cette fonction logique 8, obtenu par un ET logique entre le signal de validation ENA et le signal de l'horloge CLK, étant fourni en entrée de la borne B_{CLK} de la bascule D.

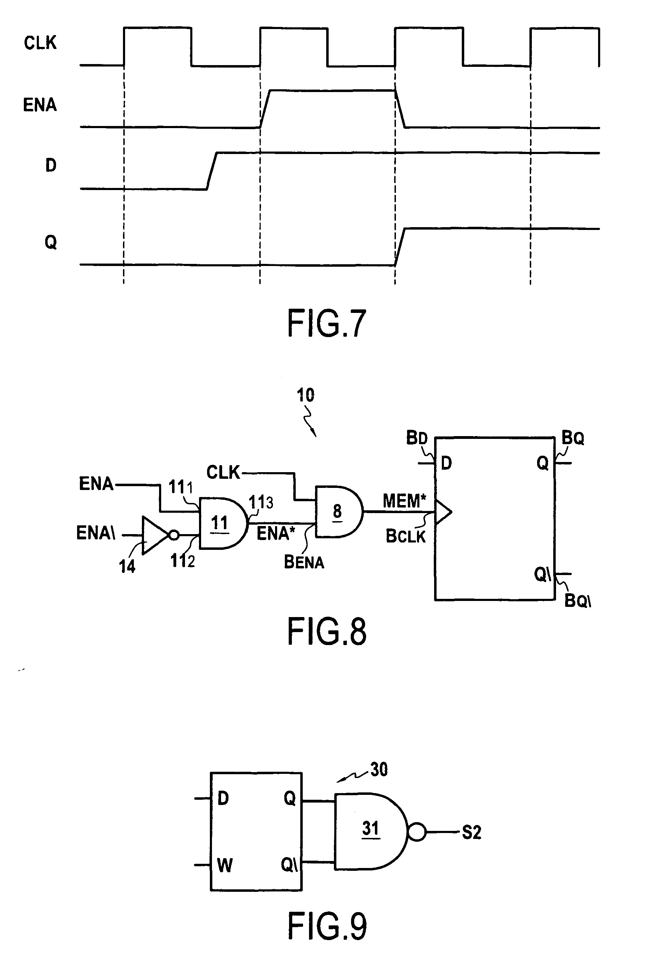

Le chronogramme de la **figure 7** illustre l'exemple de la mémorisation d'un élément binaire pendant une durée égale à un cycle d'horloge, la valeur Q étant mémorisée au moment du front montant du signal d'horloge CLK uniquement si le signal de validation ENA est à l'état haut.

Les registres de contrôle, peuvent faire l'objet d'attaques par impulsion lumineuse, une telle impulsion ayant pour effet de forcer ou de modifier la valeur d'un ou plusieurs bits du registre de contrôle objet de ladite attaque.

De façon classique, les concepteurs de circuits intégrés souhaitant se protéger contre ce type d'attaque doublent les registres de contrôle pour les comparer ensuite régulièrement (typiquement à chaque accès), une incohérence entre deux registres étant considérée comme la conséquence d'une attaque. Un exemple pour un tel circuit est donné dans le document US 2005/0127971 A1.

Cette solution n'est pas satisfaisante, le fait de doubler les registres de contrôle nécessitant une surface de silicium supplémentaire relativement couteuse.

### Objet et résumé de l'invention

L'invention vise plusieurs mécanismes de sécurisation des registres de contrôle contre des perturbations externes visant soit sur le signal de validation ENA soit un ou plusieurs signaux intermédiaires A, B, Q et Q\ des deux portes (ou latchs) qui composent une bascule D.

Plus précisément, l'invention concerne un élément de mémorisation d'une donnée binaire, cet élément comportant :
- des moyens d'entrée d'un signal représentatif de la donnée binaire , la mémorisation de la donnée binaire devant être effectuée lorsqu'un signal de validation se trouve à un premier niveau déterminé ; et
- des moyens pour fournir un signal de sortie dont l'état représente la donnée mémorisée dans l'élément de mémorisation.

Cet élément de mémorisation est remarquable en ce qu'il comporte des moyens pour détecter une attaque visant le signal de validation ou un signal interne à l'élément de mémorisation.

Autrement dit, l'invention propose de sécuriser les éléments de mémorisation des registres de contrôle plutôt que de les doubler.

L'invention permet ainsi une optimisation de la surface de silicium, moins de portes logiques étant nécessaires pour assurer la protection contre les attaques.

Dans un mode préféré de réalisation de l'invention, l'élément de mémorisation fournit un signal lorsqu'une attaque est détectée, ce signal étant pris en compte pour déclencher une action sécuritaire.

Différentes variantes de l'invention peuvent être mises en oeuvre.

Dans une première variante de réalisation, on vise à interdire une attaque affectant le signal de validation ENA et à empêcher la mémorisation d'une donnée dans l'élément de mémorisation lorsqu'une telle attaque se produit.

Dans un mode particulier de cette première variante de réalisation, l'élément de mémorisation selon l'invention comporte, en amont de la borne recevant le signal de validation :
- des moyens pour générer un signal de validation sécurisé, ce signal étant différent du signal de validation en ce qu'il prend un deuxième niveau différent du premier niveau en cas de détection d'une attaque visant le signal de validation ; et
- des moyens pour fournir ce signal de validation sécurisé en entrée de la borne précitée.

Dans un mode particulier de réalisation de l'invention, on utilise, pour générer le signal de validation sécurisé, un signal complémentaire du signal de validation lui-même, le signal de validation sécurisé étant obtenu par combinaison logique à partir de ces deux signaux.

Autrement dit, on double le signal de validation avec son signal complémentaire.

Ainsi, dans un mode particulier de réalisation de l'invention, les moyens de génération du signal de validation sécurisé comportent une porte apte à inverser le signal complémentaire du signal de validation et une fonction logique apte à produire le signal de validation sécurisé en effectuant le ET logique entre le signal de validation et le signal inversé précité.

Ainsi, si une perturbation a lieu sur l'un ou l'autre de ces signaux, ceux-ci deviendront égaux, et la fonction logique ET garde une sortie inactive.

Un attaquant peut contourner cette contremesure en perturbant la sortie de cette fonction logique ET et en la forçant à un niveau haut.

Une deuxième variante de réalisation de l'invention permet de détecter une telle attaque, en détectant la perturbation d'un ou plusieurs des signaux intermédiaires A, B, Q et Q\.

Dans cette deuxième variante de l'invention, l'élément de mémorisation selon l'invention comporte :
- des moyens pour détecter une commutation du signal de sortie ; et
- des moyens pour détecter une attaque si le signal de validation n'est pas dans le premier état au moment de la commutation.

Les première et deuxième variantes peuvent être utilisées indépendamment ou en combinaison.

Dans un mode particulier de réalisation de cette deuxième variante de réalisation, l'élément de mémorisation comporte des moyens pour générer un signal de commutation dont un niveau représente une commutation du signal de sortie d'au moins un premier niveau vers un deuxième niveau.

Ainsi, selon le mode de réalisation de l'invention, on pourra détecter :
- une commutation du signal de sortie du niveau haut vers le niveau bas ;
- une commutation du signal de sortie du niveau bas vers le niveau haut ; ou
- n'importe quel type de commutation du signal de sortie.

Par exemple, dans un mode de réalisation pour lequel on dispose d'un signal complémentaire au signal de sortie, les moyens de génération du signal de commutation comportent une première fonction logique apte à produire le signal de commutation en effectuant le NON-ET logique entre le signal de sortie et son signal complémentaire.

Fort avantageusement, cette première fonction logique produit une impulsion lorsque le signal de sortie et son signal complémentaire sont égaux, ce qui ne manque pas de se produire lors d'une commutation, pendant un laps de temps très court comme il sera démontré ci-après à l'appui de chronogrammes.

Dans un autre mode préféré de réalisation de l'invention, les moyens de génération du signal de commutation comportent une paire d'inverseur apte à inverser le signal de sortie et son signal complémentaire et une deuxième fonction logique apte à produire le signal de commutation en effectuant le NON-ET logique entre les signaux inversés précités.

La deuxième variante de réalisation de l'invention permet de détecter une attaque visant un signal interne à l'élément de mémorisation.

Il était dit précédemment que la première variante de réalisation de l'invention permettait de détecter une attaque sur le signal de validation.

Fort avantageusement, les deux variantes peuvent être combinées.

Par conséquent, l'invention vise un élément de mémorisation comportant des moyens pour générer une impulsion si le signal de validation sécurisé est dans le deuxième niveau au moment de la détection d'une commutation du signal de sortie.

Ce mode de réalisation est particulièrement robuste.

Dans un mode particulier de réalisation de l'invention, l'impulsion précitée ne dure que pendant le laps de temps pendant lequel le signal de sortie et son signal complémentaire ont la même valeur.

L'invention, propose, dans un mode particulier de réalisation de l'invention, d'allonger la durée de cette impulsion afin que celle-ci puisse être prise en compte par d'autres logiques.

L'invention vise également un registre de contrôle comportant un ou plusieurs éléments de mémorisation tels que mentionnés ci-dessus.

L'invention vise également une carte à microcircuit comportant au moins un registre de contrôle tel que mentionné ci-dessus.

### Brève description des dessins

D'autres caractéristiques de l'invention apparaitront à la lumière de la description faite ci-dessous en référence aux dessins annexés qui en illustrent un exemple de réalisation dépourvu de tout caractère limitatif et dans lesquels :
- les figures 1 et 2 déjà décrites représentent une bascule D et son chronogramme ;
- les figures 3 et 4 déjà décrites représentent les détails de la bascule D de la figure 1 et un chronogramme de cette bascule D faisant apparaître un signal intermédiaire ;
- la figure 5 déjà décrite représente une porte (ou latch) sous formes de fonctions logiques ;
- la figure 6 déjà décrite représente la bascule D de la figure 1 modifiée pour permettre la maîtrise de la mémorisation d'une information binaire ;
- la figure 7 déjà décrite représente un chronogramme de la bascule de la figure 6 ;
- les figures 8, 9, 11, 12, 13 et 14 représentent des éléments de mémorisation conformes à différents modes de réalisation de l'invention ;
- la figure 10 illustre un décalage temporel au sein de l'élément de mémorisation de la figure 9 au moment d'une commutation;
- la figure 15 représente un mécanisme pouvant être utilisé dans un élément de mémorisation selon l'invention pour allonger la durée d'une impulsion ;
- la figure 16 représente un registre de contrôle conforme à un mode particulier de la réalisation de l'invention ; et
- La figure 17 représente une carte à microcircuit conforme à l'invention.

### Description détaillée de l'invention

La **figure 8** représente un élément de mémorisation 10 conforme à un premier mode de réalisation de l'invention, cet élément de mémorisation étant apte à interdire une attaque visant le signal de validation ENA et à empêcher la mémorisation d'une donnée D en cas d'une telle détection.

Dans l'exemple de réalisation décrit ici, cet élément de mémorisation 10 comporte une fonction logique ET 11 apte à recevoir le signal de validation ENA sur une première borne d'entrée 11₁ et le signal inverse du complément ENA\ de ce signal sur une deuxième borne d'entrée 11₂, le signal de validation sécurisé ENA* en sortie 11₃ de cette fonction logique 11 étant fourni en entrée de la borne de validation B_{ENA} de la fonction logique 8 déjà décrite en référence à la figure 6.

Par conséquent, si une perturbation atteint l'un ou l'autre des signaux ENA ou ENA\, ces signaux deviennent égaux et le signal de validation sécurisé ENA* est à l'état bas 0.

Bien entendu si aucune attaque n'atteint le signal de validation ENA ou son complémentaire ENA\, le signal de validation sécurisé ENA* est équivalent au signal de validation ENA lui-même.

On nomme MEM* le signal de mémorisation sécurisé résultat du ET logique (effectué par la porte logique 8) entre le signal d'horloge CLK et le signal de validation sécurisé ENA*.

Ce signal de mémorisation sécurisé MEM* est fourni en entrée de la borne B_{CLK} de l'élément de mémorisation 10.

Dans l'agencement de la figure 8, l'élément de mémorisation 10 est apte à mémoriser une donnée D sur les fronts montants du signal d'horloge CLK uniquement si d'une part le signal de validation ENA est à l'état haut et si d'autre part, ni le signal de validation ENA ni son complémentaire ENA\ ne font l'objet d'une perturbation.

On notera qu'en pratique, si une attaque venait perturber physiquement et simultanément le signal de validation ENA et son complémentaire ENA\, il est très probable que ces deux signaux prendraient la même valeur « 0 » ou « 1 » (car l'effet physique serait le même); cette attaque serait par conséquent inefficace.

La **figure 9** illustre un autre élément de mémorisation 30 conforme à un autre mode de réalisation de l'invention.

Cet élément de mémorisation est remarquable en ce qu'il comporte des moyens pour générer un signal de commutation S2 dont un état représente une commutation du signal de sortie Q de l'état bas à l'état haut.

Dans l'exemple de réalisation décrit ici, ce signal de commutation S2 est obtenu en réalisant un NON ET logique (porte 31) entre le signal de sortie Q et son signal complémentaire Q\.

Ce mode de réalisation utilise avantageusement le décalage temporel entre la commutation du signal Q et celle du signal complémentaire Q\, ce décalage étant du à la structure même de l'élément de mémorisation comme déjà décrit en référence à la figure 5.

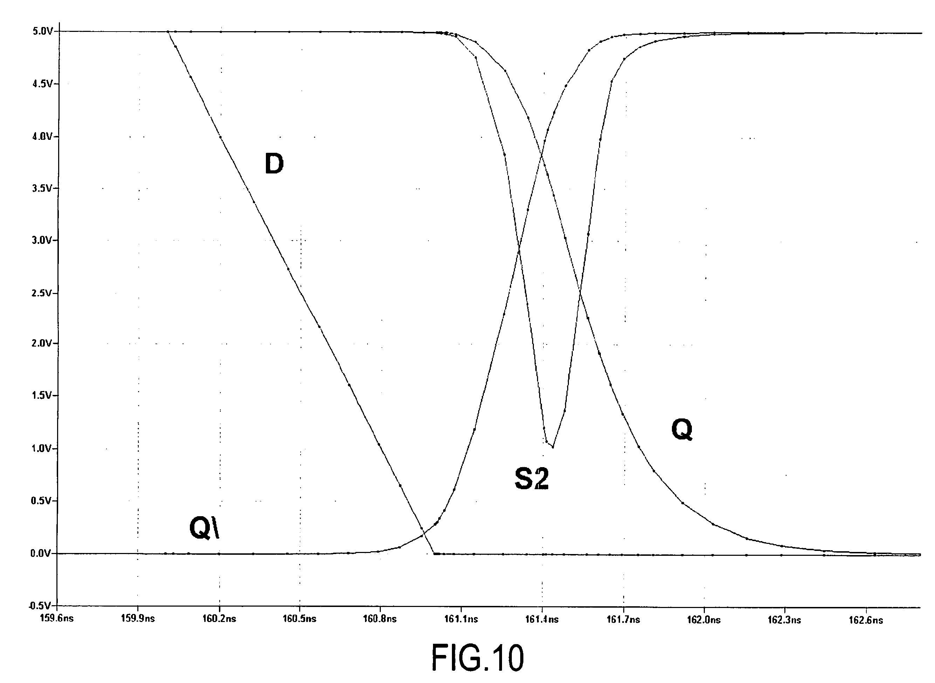

La **figure 10** illustre ce décalage dans un cas où le signal W est forcé à 1 (porte/latch déverrouillée) avec commutation du signal d'entrée Q.

Sur cette figure sont représentés :
- le signal d'entrée D ;
- le signal de sortie Q ;
- le signal complémentaire Q\ ; et
- le signal de commutation S2 résultat de la fonction NON-ET entre les signaux complémentaires Q et Q\.

Dans l'exemple de cette figure 10, on s'aperçoit que le signal complémentaire Q\ commute avant le signal de sortie Q et que le signal de commutation S2 prend un état bas (état logique 0) pendant ce laps de temps, les deux sorties Q et Q\ étant au même niveau haut (état logique 1) pendant ce laps de temps.

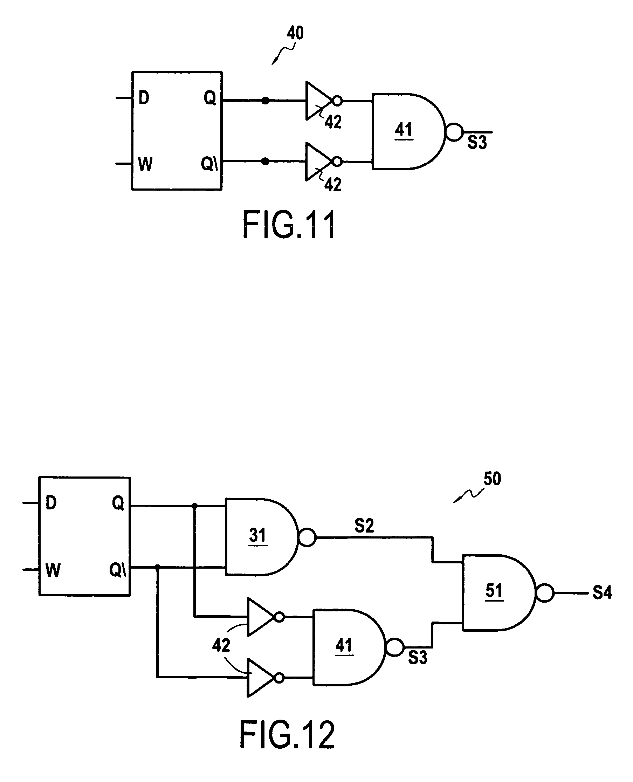

La **figure 11** représente un élément de mémorisation 40 conforme à un autre mode de réalisation de l'invention, cet élément de mémorisation étant remarquable en ce qu'il comporte des moyens pour générer un signal de commutation S3 dont un état représente une commutation du signal de sortie Q de l'état haut à l'état bas.

Lorsqu'une telle commutation se produit, les signaux Q et Q\ sont tous les deux à l'état bas pendant un laps de temps court.

Dans l'exemple de la figure 11, les moyens de l'élément de mémorisation 40 pour détecter cette commutation, sont constitués par une paire de portes inverseuses 42 aptes à inverser les signaux Q et Q\ et par une fonction logique 41 apte à produire le signal de commutation S3 en effectuant le NON-ET logique entre ces signaux inversés.

La **figure 12** représente un élément de mémorisation 50 conforme à l'invention apte à produire un signal de commutation S4 lors d'une commutation du signal de sortie Q de l'état haut à l'état bas ou de l'état bas à l'état haut.

Cet élément de mémorisation est obtenu en combinant les modes de réalisation des figures 10 et 11, les sorties S2 et S3 des portes logiques 31 et 32 étant fournies en entrée d'une fonction logique 51 apte à produire un signal de commutation S4 en effectuant le NON ET logique entre les signaux S2 et S3.

Il a été expliqué ci-dessus comment les éléments de mémorisation 30, 40 et 50 des figures 9, 11 et 12 étaient aptes à détecter une commutation du signal de sortie Q.

Dans un mode particulier de réalisation de l'invention pouvant s'appliquer à n'importe lequel des éléments de mémorisation 30, 40 et 50, on vérifie si cette commutation est voulue ou due à une attaque.

Pour cela, l'invention propose de vérifier l'état du signal de validation ENA au moment où l'on détecte la commutation.

Dans un mode préféré de réalisation combinant les deux variantes de l'invention, on s'intéresse non pas à l'état du signal de validation ENA lui-même, mais à l'état du signal de validation sécurisé ENA*.

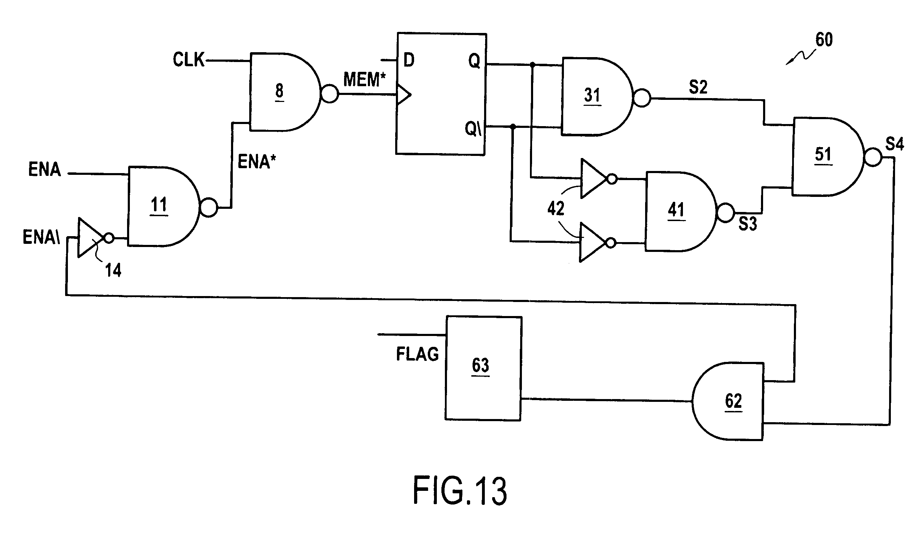

La **figure 13** représente un élément de mémorisation 60 conforme à ce mode de réalisation. Il est obtenu à partir de l'élément de mémorisation 10 de la figure 8 et de l'élément de mémorisation 50 de la figure 12.

Plus précisément, dans le mode de réalisation décrit ici, l'élément de mémorisation 60 comporte une porte ET 62 prenant en entrée le signal de validation ENA et le signal de commutation S4.

Ainsi, une impulsion en sortie de la porte ET 62 indiquant une commutation de la sortie Q de l'élément de mémorisation 60 ne sera prise en compte que si le signal de validation ENA est actif.

Dans le cas d'une commutation frauduleuse (par perturbation de ENA* ou des signaux intermédiaires de la bascule D), l'impulsion passe en sortie de la porte ET 62 (le signal ENA\ n'étant pas touché dans ce cas, celui-ci est à l'état haut et laisse passer l'impulsion au niveau de la porte 62), celle-ci étant connectée à l'entrée SET d'une bascule RS synchrone 63.

La sortie FLAG de la bascule RS permet de détecter la fraude et d'engager une action sécuritaire.

Dans le cas d'une perturbation des signaux ENA ou ENA\, ENA* reste inactif, donc Q et Q\ ne sont pas modifiés. Une telle attaque n'est pas détectée car elle n'entraîne pas la levée du FLAG ; cependant ce n'est pas gênant, le registre ayant conservé sa valeur.

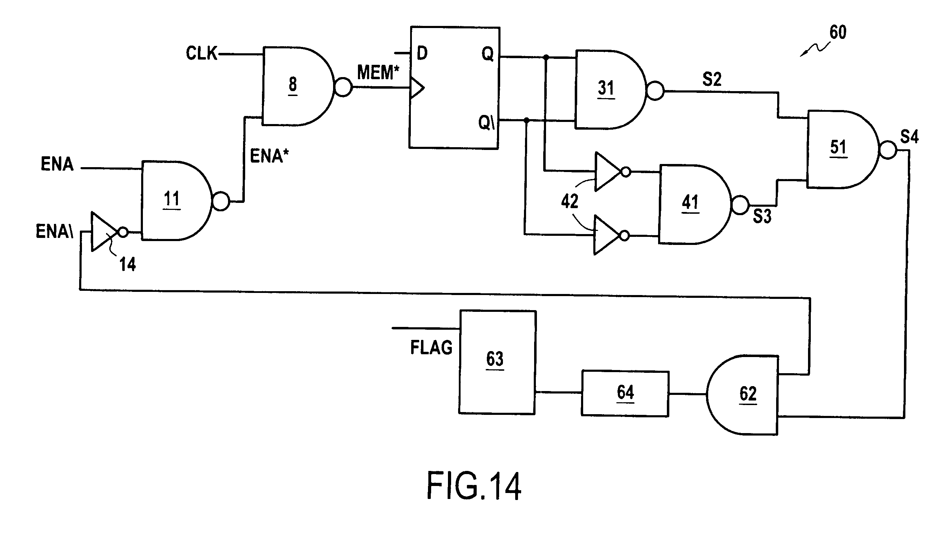

Dans l'exemple de réalisation de la **figure 14****,** l'élément de mémorisation 60 comporte en outre un dispositif 64 pour allonger la durée de l'impulsion en sortie de la porte ET 62.

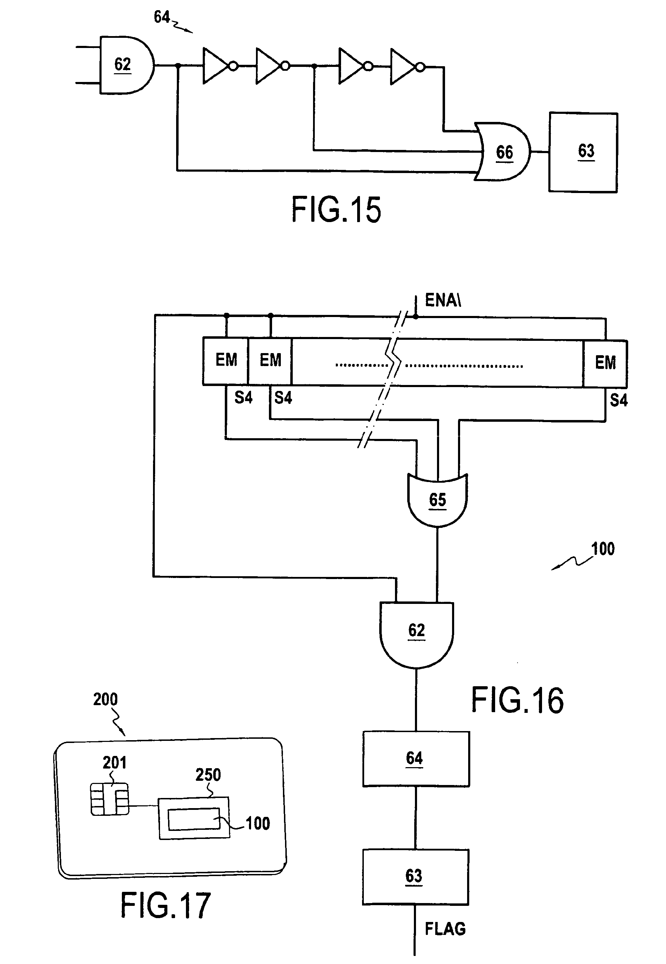

Ce dispositif 64 représenté à la **figure 15** comporte une série de portes inverseuses en nombre pair, chacune permettant d'ajouter un retard dans le signal en sortie de la porte logique 62 et une porte OU 66 apte à fournir, en entrée de la bascule RS 63, une impulsion de durée allongée.

La description qui a été faite précédemment en référence aux figures 8 à 15 permet de sécuriser un élément de mémorisation contre les attaques visant le signal de validation ou un signal interne à cet élément.

L'invention peut être appliquée pour mémoriser plusieurs éléments de mémorisation d'un registre de contrôle, par exemple dans une carte à microcircuit. Dans ce cas, certains éléments logiques peuvent être factorisés : (porte 61, dispositif 64) afin d'optimiser la surface du dispositif.

La **figure 16** représente un registre de contrôle conforme à l'invention comportant plusieurs éléments de mémorisation EM conformes à l'invention, chacun de ces éléments EM de mémorisation pouvant être conforme à l'un de ceux décrits en référence aux figures 8, 9, 11, 12, 13 ou 14.

La **figure 17** représente une carte à microcircuit 200 conforme à l'invention.

Dans ce mode de réalisation, la carte à microcircuit 200 est conforme au standard ISO 7816. Elle comporte notamment une plage de contacts 201 et un microcontrôleur 250.

Ce microcontrôleur 250 comporte un registre 100 conforme à l'invention de type de celui de la figure 16, dans lequel est mémorisée une clef secrète.

## Revendications

1. Elément de mémorisation d'une donnée binaire (D) comportant :
- des moyens d'entrée (B_{D}) d'un signal représentatif de ladite donnée binaire, ladite mémorisation devant être effectuée lorsqu'un signal de validation (ENA) se trouve à un premier niveau déterminé ;
- des moyens pour fournir un signal de sortie (Q) dont l'état représente la donnée mémorisée dans ledit élément de mémorisation (10),
cet élément de mémorisation (10) étant **caractérisé en ce qu'**il comporte des moyens :
- des moyens pour détecter une commutation dudit signal de sortie (Q) ; et
- des moyens pour détecter une attaque si ledit signal de validation (ENA) n'est pas dans ledit premier niveau au moment de la détection de ladite commutation.

2. Elément de mémorisation (10) selon la revendication 1 comportant une borne (B_{ENA}) apte à recevoir ledit signal de validation (ENA), **caractérisé en ce qu'**il comporte en amont de ladite borne (B_{ENA}) :
- des moyens pour générer un signal de validation sécurisé (ENA*) différent dudit signal de validation (ENA) **en ce qu'**il prend un deuxième niveau différent dudit premier niveau en cas de détection d'une attaque visant ledit signal de validation (ENA) ; et
- des moyens pour fournir ledit signal de validation sécurisé (ENA*) en entrée de ladite borne (B_{ENA}).

3. Elément de mémorisation selon la revendication 2 **caractérisé en ce que** lesdits moyens de génération comportent une porte (14) apte à inverser le signal complémentaire (ENA\) dudit signal de validation (ENA) et une fonction logique (11) apte à produire ledit signal de validation sécurisé (ENA*) en effectuant le ET logique entre ledit signal de validation (ENA) et ledit signal inversé (ENA\).

4. Elément de mémorisation (30) selon la revendication 1 **caractérisé en ce qu'**il comporte des moyens (31) pour générer un signal (S2, S3, S4) dit
« de commutation », dont un niveau représente une commutation dudit signal de sortie (Q) d'au moins un premier niveau vers un deuxième niveau.

5. Elément de commutation (10) selon la revendication 4 comportant une sortie pour un signal complémentaire (Q\) dudit signal de sortie (Q) et dans lequel lesdits moyens de génération du signal (52) de commutation comportent une première fonction logique (31) apte à produire ledit signal de commutation (S2) en effectuant le NON-ET logique entre ledit signal de sortie (Q) et son signal complémentaire (Q\).

6. Elément de commutation (10) selon les revendications 4 ou 5 dans lequel lesdits moyens de génération du signal de commutation (S3, S4) comportent :
- une paire d'inverseurs (42) aptes à inverser ledit signal de sortie (Q) et son signal complémentaire (Q\) ; et
- une deuxième fonction logique (41) apte à produire ledit signal de commutation (53) en effectuant le NON-ET logique entre lesdits signaux inversés.

7. Elément de mémorisation selon l'une quelconque des revendications 1 à 6 **caractérisé en ce qu'**il comporte des moyens pour générer une impulsion si ledit signal de validation sécurisé (ENA*) est dans ledit deuxième niveau au moment de la détection de ladite commutation.

8. Elément de mémorisation selon la revendication 7 **caractérisé en ce qu'**il comporte des moyens (64) pour allonger la durée de ladite impulsion.

9. Registre de contrôle (100) comportant au moins un élément de mémorisation selon l'une quelconque des revendications 1 à 8.

10. Carte à microcircuit (200) **caractérisée en ce qu'**elle comporte au moins un registre de contrôle (100) selon la revendication 9.

## Claims

1. A storage element for a binary datum (D) comprising:
- means (B_{D}) for inputting a signal representative of said binary datum, said storage to be performed when an enable signal (ENA) is at a first predetermined level;
- means for supplying an output signal (Q) the state whereof represents the datum stored in said storage element (10),
this storage element (10) being **characterized in that** it comprises :
- means for detection commutation of said output signal (Q) ; and
- means for detecting an attack if said enable signal (ENA) is not in said first state at the time of detection of said commutation.

2. A storage element (10) according to Claim 1 comprising a terminal (B_{ENA}) capable of receiving said enable signal (ENA) and comprising upstream of said terminal (B_{ENA}):
- means for generating a secure enable signal (ENA*) different from said enable signal (ENA) in that it takes on a second level that is different from said first level in the event of detection of an attack aimed at said enable signal (ENA); and
- means for supplying said secure enable signal (ENA*) as input to said terminal (B_{ENA}).

3. A storage element according to Claim 2 wherein that said means of generation comprise a gate (14) capable of inverting the complementary signal (ENA\) of said enable signal (ENA) and a logic function (11) capable of producing said secure enable signal (ENA*) by performing a logical AND between said enable signal (ENA) and said inverted signal (ENA\).

4. A storage element (30) according to Claim 1, comprising means (31) for generating a signal (S2, S3, S4), called a "commutation signal," one level whereof represents a commutation of said output signal (Q) from at least one first level to a second level.

5. A storage element (10) according to claim 4 comprising an output for a complementary signal (Q\) of said output signal (Q) and wherein said means (S2) of generating the commutation signal comprise a first logic function (31) capable of producing said commutation signal (S2) by performing a logical NOT AND between said output signal (Q) and its complementary signal (Q\).

6. A storage element (10) according to Claim 4 or 5 wherein said means (S3, S4) of generating the commutation signal comprise:
- a pair of inverters (42) capable of inverting said output signal (Q) and its complementary signal (Q\) ; and
- a second logic function (41) capable of producing said commutation signal (S3) by performing a logical NOT AND between said inverted signals.

7. A storage element according to any one of Claims 1 to 6 comprising means for generating a pulse if said secure enable signal (ENA*) is at said second level at the time that said commutation is detected.

8. A storage element according to claim 7 comprising means (64) for extending the duration of said pulse.

9. A control register (100) comprising at least one storage element according to any one of Claims 1 to 8.

10. A microcircuit card (200) comprising at least one control register (100) according to Claim 9.

## Patentansprüche

1. Speicherelement für Binärdaten (D), umfassend:
- Eingangsmittel (B_{D}) für ein Signal, das für die Binärdaten charakteristisch ist, wobei die Speicherung durchgeführt werden muß, wenn ein Freigabesignal (ENA) sich auf einem ersten bestimmten Pegel befindet,
- Mittel zum Liefern eines Ausgangssignals (Q), dessen Zustand die gespeicherten Daten in dem Speicherelement (10) darstellt,
wobei das Speicherelement (10) **dadurch gekennzeichnet ist, daß** es folgende Mittel umfaßt:
- Mittel zum Ermitteln eines Umschaltens des Ausgangssignals (Q) und
- Mittel zum Ermitteln eines Angriffs, wenn das Freigabesignal (ENA) zum Zeitpunkt der Ermittlung des Schaltens sich nicht auf dem ersten Pegel befindet.

2. Speicherelement (10) nach Anspruch 1, das einen Anschluß (B_{ENA}) umfaßt, der geeignet ist, das Freigabesignal (ENA) zu empfangen, **dadurch gekennzeichnet, daß** es dem Anschluß (B_{ENA}) vorgelagert umfaßt:
- Mittel zum Erzeugen eines gesicherten Freigabesignals (ENA*), das sich vom Freigabesignal (ENA) darin unterscheidet, daß es im Fall einer Ermittlung eines Angriffs, der auf das Freigabesignal (ENA) abzielt, einen zweiten Pegel annimmt, der sich vom ersten Pegel unterscheidet; und
- Mittel zum Liefern des gesicherten Freigabesignals (ENA*) als Eingang des Anschlusses (B_{ENA}).

3. Speicherelement nach Anspruch 2, **dadurch gekennzeichnet, daß** die Erzeugungsmittel einen Latch (14), der geeignet ist, um das ergänzende Signal (ENA\) des Freigabesignals (ENA) umzukehren, und eine logische Funktion (11) umfassen, die geeignet ist, das gesicherte Freigabesignal (ENA*) durch Durchführen des logischen UND zwischen dem Freigabesignal (ENA) und dem umgekehrten Signal (ENA\) zu erzeugen.

4. Speicherelement (30) nach Anspruch 1, **dadurch gekennzeichnet, daß** es Mittel (31) zum Erzeugen eines Signals (S2, S3, S4) umfaßt, das "Schaltsignal" genannt wird, von dem ein Pegel ein Umschalten des Ausgangssignals (Q) von mindestens einem ersten Pegel auf einen zweiten Pegel darstellt.

5. Schaltelement (10) nach Anspruch 4, das einen Ausgang für ein ergänzendes Signal (Q\) des Ausgangssignals (Q) umfaßt und in dem die Mittel zur Erzeugung des Schaltsignals (S2) eine erste logische Funktion (31) umfassen, die geeignet ist, das Schaltsignal (S2) durch Durchführen des logischen NEIN-UND zwischen dem Ausgangssignal (Q) und seinem ergänzenden Signal (Q\) zu erzeugen.

6. Schaltelement (10) nach Anspruch 4 oder 5, wobei die Mittel zur Erzeugung des Schaltsignals (S3, S4) umfassen:
- ein Paar Umkehreinrichtungen (42), die geeignet sind, das Ausgangssignal (Q) und sein ergänzendes Signal (Q\) umzukehren; und
- eine zweite logische Funktion (41), die geeignet ist, das Schaltsignal (S3) durch Durchführen des logischen NEIN-UND zwischen den umgekehrten Signalen zu erzeugen.

7. Speicherelement nach einem der Ansprüche 1 bis 6, **dadurch gekennzeichnet, daß** es Mittel umfaßt, um einen Impuls zu erzeugen, wenn das gesicherte Freigabesignal (ENA*) sich zum Zeitpunkt des Ermittelns des Umschaltens auf dem zweiten Pegel befindet.

8. Speicherelement nach Anspruch 7, **dadurch gekennzeichnet, daß** es Mittel (64) zum Verlängern der Dauer des Impulses umfaßt.

9. Kontrollregister (100), das mindestens ein Speicherelement nach einem der Ansprüche 1 bis 8 umfaßt.

10. Chipkarte (200), **dadurch gekennzeichnet, daß** sie mindestens ein Kontrollregister (100) nach Anspruch 9 umfaßt.
